Europäisches Patentamt

European Patent Office

Office européen des brevets

(19)

(11) Veröffentlichungsnummer: **0 005 726**
**B1**

(12)

# EUROPÄISCHE PATENTSCHRIFT

(45) Veröffentlichungstag der Patentschrift:
14.10.81

(21) Anmeldenummer: 79101247.9

(22) Anmeldetag: 25.04.79

(51) Int. Cl.³: **B 02 C 18/06**, B 02 C 18/18 //
A47J43/06

(54) Schneidsatz für eine Vorrichtung zum Zerkleinern von Nahrungsmitteln.

(30) Priorität: 27.05.78 DE 2823245

(43) Veröffentlichungstag der Anmeldung:
12.12.79 Patentblatt 79/25

(45) Bekanntmachung des Hinweises auf die Patenterteilung:
14.10.81 Patentblatt 81/41

(84) Benannte Vertragsstaaten:
CH FR GB IT NL SE

(56) Entgegenhaltungen:
CH-A-459 791
CH-A-480 873
DE-B-1 117 439
US-A-2 808 866
US-A-3 369 583

(73) Patentinhaber: A. Stephan u. Söhne GmbH & Co,
Stephanplatz 2, D-3250 Hameln (DE)

(72) Erfinder: Otto, Friedrich, Ing. grad., Reuterweg 21,
D-3250 Hameln 1 (DE)

(74) Vertreter: Gramm, Werner, Dipl.-Ing. et al, Patentanwälte
Gramm + Lins Theodor-Heuss-Strasse 2,
D-3300 Braunschweig (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Schneidsatz für eine Vorrichtung zum Zerkleinern von Nahrungsmitteln

Die Erfindung betrifft einen Schneidsatz für eine elektromotorisch angetriebene Vorrichtung zum Zerkleinern von Nahrungsmitteln, bestehend aus zwei konzentrisch ineinander angeordneten und relativ gegeneinander umlaufenden Schneidringen mit zwischen sich Schlitze bildenden und eine Schneidkante aufweisenden Zähnen, die bei dem äußeren Schneidring axial verlaufen und ein flächiges Schneidprofil aufweisen, dessen eine an dem zwischen den beiden Schneidringen im Ringspalt liegende Axialkante als Schneidkante ausgebildet ist, während seine andere, parallel verlaufende Axialkante zusammen mit der Schneidkante des folgenden Schneidprofils eine für die Feinheit des herzustellenden Produktes entsprechend verengte Schneidlücke bildet, wobei die Schneidkanten beider Schneidringe gegeneinander geneigt sind.

Eine derartige Ausführungsform läßt sich der US-A-3 369 583 entnehmen. Hier ist der angetriebene innere Schneidring leicht konusförmig ausgebildet; seine Schlitze sind verhältnismäßig breite, langgestreckte Öffnungen, die nicht genau in axialer Richtung, sondern hierzu etwas geneigt angeordnet sind. Der eine Rand der die Schlitze bildenden Öffnungen definiert die Schneidkante. Der stationär angeordnete äußere Schneidring ist auf seiner inneren Mantelfläche dem Konus des inneren Schneidringes angepaßt. Die Schlitze verlaufen in axialer Richtung und sind zu ihrem einen Ende hin offen, so daß die zwischen sich die Schlitze bildenden Zähne freistehen und ebenfalls genau axial verlaufen. Das Schneidprofil ist unmittelbar in den Zahn eingearbeitet; Zahn und Schneidprofil sind somit einteilig ausgebildet. Die Breite der Schneidlücke entspricht somit der Breite der genannten Schlitze.

Bei Zerkleinerungsvorrichtungen der in Rede stehenden Art dürfen die Schneidlücken im äußeren Schneidring nur eine Breite von 0,05 bis 2,0 mm aufweisen. Bei der vorstehend erläuterten Ausführungsform müssen die Schlitze des äußeren Schneidringes mit sehr dünnen Fräsern und entsprechend vorsichtiger Zerspanung erzeugt werden. Derartige Schneidringe können nur gehärtet eingesetzt werden. Ein Nachschleifen dieser Ringe — und dies ist in der Praxis beim Einsatz zur Zerkleinerung von Nahrungsmitteln, insbesondere von rohem oder gekochtem Fleisch unumgänglich — ist überhaupt nicht, oder aber nur mit sehr großem Aufwand möglich. Dies bedeutet aber, daß bei der vorbekannten Ausführungsform der äußere Schneidring je nach Gebrauch und Größe der Maschine innerhalb von vier Wochen bis vier Monaten schrottreif wäre.

Nachteilig ist ferner, daß es für derart feine Schlitze keine Schleifscheiben gibt, so daß ein Nachfräsen bei einem gehärteten Ring unmöglich wäre.

Nachteilig ist schließlich, daß die die Schneidlücken bildenden Schlitze im äußeren Schneidring genau axial verlaufen. Dies führt zu einer Verschlechterung der Qualität des Endproduktes. Dieser Mangel wird auch nicht durch die geneigte Anordnung der Schlitze im inneren Schneidring kompensiert. Denn es ist aus verschiedenen Gründen nicht möglich, den gesamten Schneidwinkel allein in den inneren rotierenden Schneidring zu legen. Unter anderem würden dann aufgrund der zu großen Neigung der Schlitze zu große Kraftkomponenten in Achsrichtung auftreten, die das Schneidgut zu stark in diese Richtung pressen würden.

Das Problem, aus fertigungstechnischen Gründen die Schlitze im äußeren Schneidring möglichst breit auszubilden, zur Erzielung eines qualitativ hochwertigen Endproduktes aber sehr schmale Schneidlücken vorzusehen, wurde bei einer Zerkleinerungsvorrichtung gemäß der DE-B-1 117 439 durch einen zusätzlichen Zwischenring gelöst. Dieser zusätzliche Schneidring ist in den äußeren stationären Messerring derart eingesetzt, daß seine Zähne in die Schlitze des äußeren Schneidringes ragen. Durch eine bestimmte Verdrehstellung zwischen dem äußeren Schneidring und dem in ihm eingesetzten zusätzlichen Schneidring läßt sich die Breite der Schneidlücken in gewissen Grenzen ändern.

Eine vergleichbare Zerkleinerungsvorrichtung läßt sich der CH-A-480 873 sowie der CH-A-459 791 entnehmen. Bei der Vorrichtung gemäß der letzteren Druckschrift besteht der äußere Schneidring aus einem korrosionsbeständigen Werkstoff und ist mit Schneidprofilen aus Hartmetall bestückt. Diese Schneidprofile sind in Nuten eingeklebt, die in den Schlitzkanten des äußeren Schneidringes liegen.

Auch diesen vorbekannten Ausführungsformen haften einige Nachteile an:

Die Breite der Schneidlücken läßt sich nicht exakt genug vorherbestimmen. Dadurch ist es schwierig, den für das fertige Produkt jeweils gewünschten Feinheitsgrad zu erzielen. Um die Breite der Schneidlücken überhaupt klein genug halten zu können, ist es aus fertigungstechnischen Gründen erforderlich, in den äußeren Schneidring einen zusätzlichen Schneidring einzusetzen, so daß sich eine entsprechend aufwendige Herstellung ergibt. Wegen dieses zusätzlichen Schneidringes lassen sich in dem äußeren Schneidring nur verhältnismäßig wenige Zähne und damit auch nur entsprechend wenige Schneidelemente unterbringen. Dies wirkt sich nachteilig auf die erzielbare Leistung aus. Außerdem wird durch den zusätzlichen Einsatzring zwangsläufig eine Trennlücke zwischen den Zähnen der beiden Ringe geschaffen. Diese Trennlücke wird für den Schneidvorgang nicht benötigt, führt aber zu dem Nachteil, daß unter Umständen zwar feines, jedoch noch verhältnismäßig langfaseriges Gut in das Fertigprodukt gelangen kann.

Außerdem hat sich in der Praxis gezeigt, daß in dem Bereich der Zähne, der den Ringspalt zwischen den beiden Schneidringen definiert und nicht von den Hartmetallschneiden abgedeckt ist, Auswaschungen auftreten, die die Standzeit des Schneidringes erheblich reduzieren.

Der Erfindung liegt somit die Aufgabe zugrunde, bei einem Schneidsatz gemäß der US-A-3 369 583 den äußeren Schneidring hinsichtlich seiner Herstellung zu vereinfachen und hinsichtlich seiner Leistung und Standzeit zu verbessern.

Diese Aufgabe wird gemäß der Erfindung dadurch gelöst, daß die genannten Schneidprofile durch auswechselbare Platten aus Hartmetall o. dgl. gebildet sind, die den ihr zugeordneten, axial gerichteten Zahn auf dessen dem Ringspalt zwischen den beiden Schneidringen zugewandten Seite vollständig übergreift, und daß die beiden Axialkanten jedes Schneidprofils gegen die Schneidrichtung des inneren Schneidringes geneigt sind, so daß die rückwärtige Ansicht des Schneidprofils eine parallelogrammähnliche Ausbildung zeigt.

Ein wesentlicher Vorteil der Erfindung ist darin zu sehen, daß durch die Gestaltung der plattenförmigen Schneidprofile sich praktisch beliebig schmale Schneidlücken erzeugen lassen, da die plattenförmigen Schneidprofile einzeln hergestellt, vorzugsweise gepreßt werden. Außerdem lassen sich die separat hergestellten Schneidprofile besonders einfach schärfen, da sie ohne großen Aufwand von den Zähnen abgelöst und anschließend wieder befestigt werden können. Sind die Platten nicht mehr nachschleifbar, werden sie gegen neue ausgetauscht. Dadurch erhält der hinsichtlich der Herstellung besonders teuere äußere Schneidring als Träger der erfindungsgemäßen Platten eine nahezu unbegrenzte Lebensdauer.

Ein weiterer Vorteil ist darin zu sehen, daß sich auch die Neigung der Schneidlücken im äußeren Schneidring sehr einfach erzeugen läßt. Die zwischen den Zähnen gebildeten Schlitze können genau in Axialrichtung verlaufen und lassen sich dadurch mit einem üblichen Scheibenfräser herstellen, zumal die Breite dieser Schlitze ausreichend groß gewählt werden kann. Der Neigungswinkel hingegen ist ausschließlich bei der separaten Herstellung der plattenförmigen Schneidelemente zu berücksichtigen und führt hier zu keinerlei Problemen.

Erfindungsgemäß besteht nunmehr die gesamte, den Ringspalt zwischen den beiden Schneidringen auf der einen Seite definierende Fläche aus Hartmetall. Ein Auswaschen der die Schneidprofile tragenden Zähne des äußeren Schneidringes ist daher nicht mehr möglich. Da sich die neuen plattenförmigen Schneidprofile mit großer Genauigkeit fertigen lassen, und weil diese Schneidprofile die sie tragenden Zähne in Umfangsrichtung gesehen beidseitig überragen können, ist es möglich, die Schneidlücken unmittelbar durch zwei aufeinanderfolgende Schneidprofile zu definieren. Die Breite der Schneidlücken läßt sich daher von vornherein sehr exakt bestimmen, so daß nunmehr auch die jeweils gewünschten Feinheitsgrade des fertigen Produktes sehr genau erreicht werden können.

Gegenüber einer Vorrichtung gemäß der DE-B-1 117 439 ergibt sich der große Vorteil, daß der zur Erzeugung der schmalen Schneidlücken erforderliche Zwischenring ersatzlos entfallen kann. Dadurch läßt sich ohne Schnwächung des äußeren Schneidringes dessen Zähnezahl und damit die Anzahl seiner Schneidkanten um mindestens ein Drittel erhöhen. Die dadurch erreichten zusätzlichen Schnitte pro Zeiteinheit erhöhen die Leistung des Schneidsatzes und wirken sich positiv auf den Feinheitsgrad des zu verarbeitenden Gutes aus. Durch den Wegfall des Zwischenringes entfallen auch die überflüssigen Trennlücken, so daß feines, jedoch zu langfaseriges Gut nicht mehr in das Fertigprodukt gelangen kann.

Da bei dem erfindungsgemäßen Schneidsatz sowohl die Schneidkanten des inneren Schneidringes als auch die Schneidkanten des äußeren Ringes gegen die Schneidrichtung des jeweils anderen Schneidringes geneigt sind, erhält man einen kurz und exakt schneidenden, scherenartigen Schnitt.

Zur Befestigung der Schneidprofile ist es zweckmäßig, wenn jeder Zahn in eine im Rücken des Schneidprofils vorgesehene Nut eingreift, die parallel zu dem axial gerichteten Zahn verläuft. Dabei kann die Nut im Querschnitt leicht konisch ausgebildet sein. Die Schneidprofile sind vorzugsweise durch Kleben und/oder Nieten an den Zähnen befestigt.

In der Zeichnung ist eine als Beispiel dienende Ausführungsform der Erfindung dargestellt. Es zeigt

Fig. 1 im Längsschnitt eine vorbekannte Zerkleinerungsvorrichtung mit einem Schneidsatz aus zwei konzentrisch ineinander angeordneten und relativ gegeneinander umlaufenden Schneidringen,

Fig. 2 in vergrößertem Maßstab in Draufsicht und zum Teil im Querschnitt den äußeren Schneidring eines Schneidsatzes gemäß der Erfindung,

Fig. 3 das in Fig. 2 geschnitten dargestellte Detail in vergrößertem Maßstab,

Fig. 4 einen Schnitt gemäß der Linie IV-IV in Fig. 2,

Fig. 5 in vergrößertem Maßstab ein Schneidprofil gemäß der Erfindung in Rückansicht und

Fig. 6 eine Draufsicht der Darstellung gemäß Fig. 5.

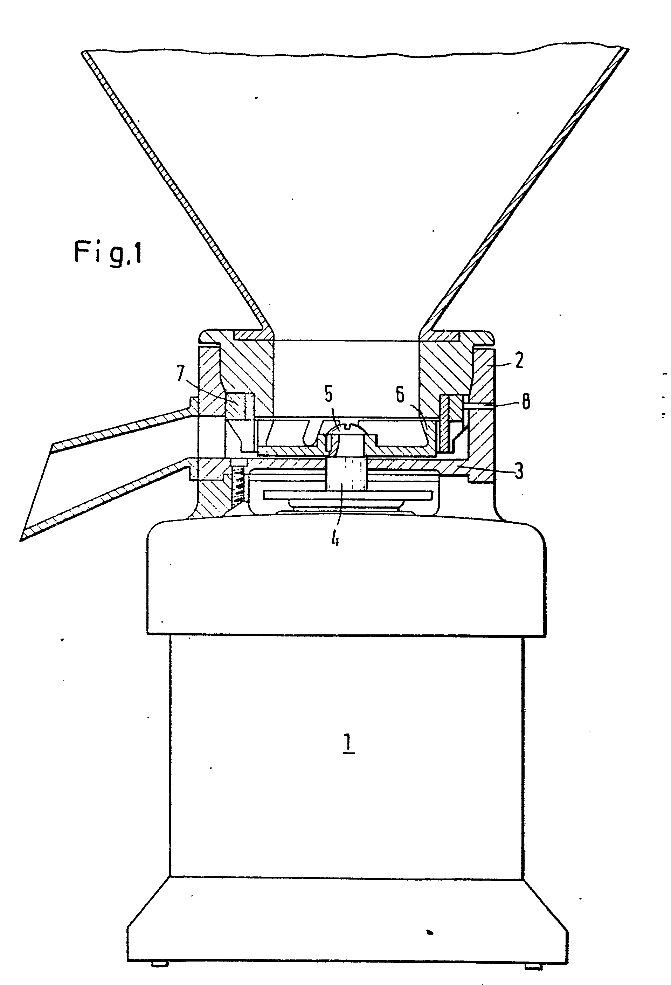

Gemäß Fig. 1 ist auf einen Motor 1 ein Schneidgehäuse 2 aufgesetzt, durch dessen Boden 3 die vertikal stehende Motorwelle 4 hindurchgeführt ist. Auf dieser ist über eine Schraube 5 ein innerer Schneidring 6 befestigt, der von einem äußeren Schneidring 7 konzentrisch übergriffen wird, der gegen Verdrehung gegenüber dem Schneidgehäuse 2 durch einen Stift 8 gesichert ist. Der innere Schneidring 6 läuft somit gegenüber dem äußeren Schneidring 7 relativ um.

Diese Zerkleinerungsvorrichtung gehört zum Stand der Technik.

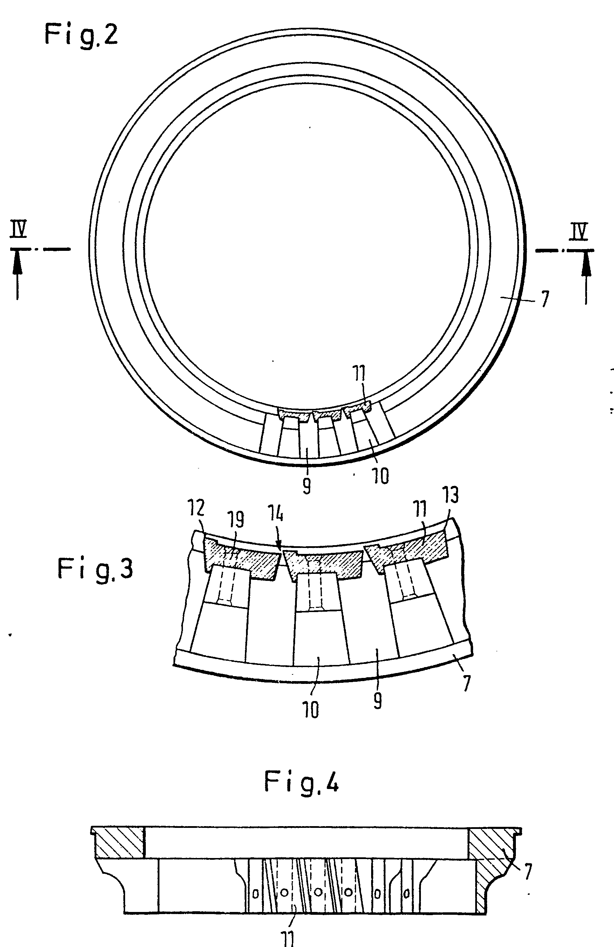

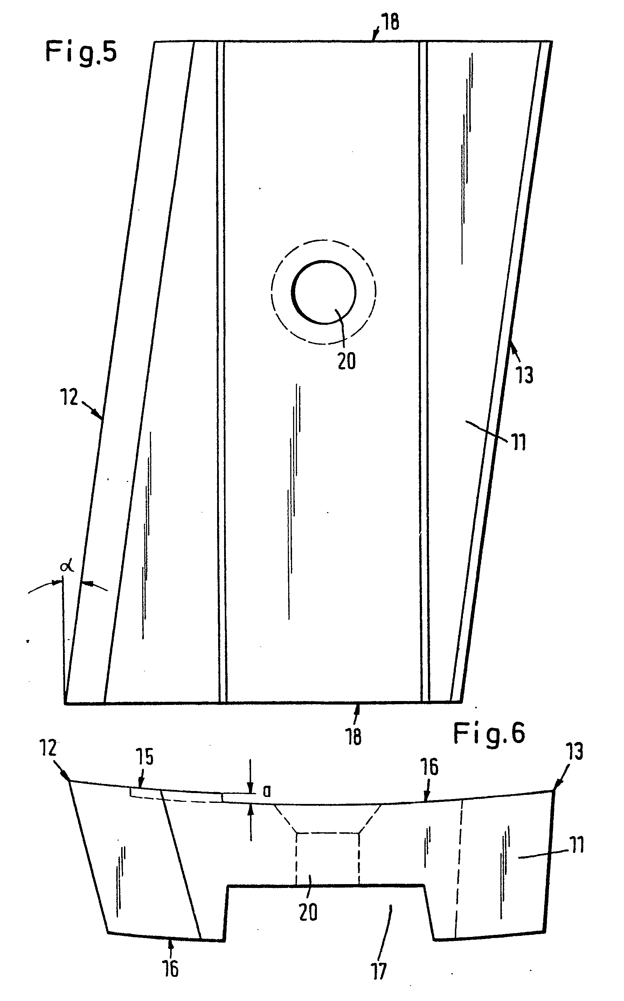

Die Fig. 2 bis 4 zeigen einen äußeren Schneidring 7, der gemäß der Erfindung ausgebildet ist. Auf axial gerichteten, zwischen sich Axialschlitze 9 bildenden Zähnen 10 sind aus Hartmetall bestehende, plattenförmig ausgebildete Schneidprofile 11 befestigt. Die Fig. 2 und 3 lassen erkennen, daß jedes Schneidprofil 11 den ihm zugeordneten Zahn 10 auf seiner radial innenliegenden Seite vollständig übergreift. Diese Seite definiert den Ringspalt, der zwischen dem inneren Schneidring 6 und dem äußeren Schneidring 7 gebildet wird.

Die eine der beiden an dem genannten Ringspalt liegenden Axialkanten des Schneidprofils 11 ist als Schneidkante 12 ausgebildet (siehe Fig. 5 und 6), während die andere Axialkante 13 zusammen mit der Schneidkante 12 des folgenden Schneidprofils 11 eine Schneidlücke 14 bildet (siehe Fig. 3). Gemäß Fig. 5 verlaufen die beiden genannten Axialkanten 12, 13 jedes Schneidprofiles 11 parallel zueinander und sind gegen die Schneidrichtung des inneren Schneidringes 6 um einen Winkel $\alpha$ geneigt, der vorzugsweise etwa 7° beträgt. Die in Fig. 5 dargestellte rückwärtige Ansicht eines Schneidprofils zeigt die parallelogrammähnliche Ausbildung.

Gemäß Fig. 6 ist die den Ringspalt zwischen den beiden Schneidringen 6, 7 definierende Fläche des Schneidprofiles 11 entsprechend der Krümmung des Ringspaltes kreisbogenförmig ausgebildet. Die genannte Fläche setzt sich aus einer verhältnismäßig schmal ausgebildeten Schneidfläche 15 sowie einer Führungsfläche 16 zusammen, die in radialer Richtung hinter die Schneidfläche 15 um den Abstand a zurückspringt. Im Rücken 16 des Schneidprofiles 11 ist eine Nut 17 eingearbeitet, die senkrecht zu den axialen Stirnkanten 18 des Schneidprofiles verläuft und im Querschnitt leicht konisch ausgebildet ist. Bei der Herstellung des äußeren Schneidringes 7 werden die Schneidprofile 11 mit der Nut 17 auf den jeweils zugeordneten Zahn 10 aufgesetzt und mit diesem durch Kleben und Nieten 19 befestigt.

Fig. 4 läßt erkennen, daß die Zähne 10 genau axial gerichtet sein können, sich also einfach herstellen lassen. Die gewünschte Neigung der Schneidkante 12 um den Winkel $\alpha$ wird ausschließlich durch das Schneidprofil 11 definiert.

Die Fig. 5 und 6 zeigen eine das Schneidprofil 11 durchdringende Bohrung 20 mit einer Ansenkung zur Aufnahme der Nietbefestigung 19.

Der Schneidsatz gemäß der Erfindung kann nicht nur in vertikal arbeitenden Maschinen, sondern z. B. auch in horizontal arbeitenden Maschinen Verwendung finden.

## Patentansprüche

1. Schneidsatz für eine elektromotorisch angetriebene Vorrichtung zum Zerkleinern von Nahrungsmitteln, bestehend aus zwei konzentrisch ineinander angeordneten und relativ gegeneinander umlaufenden Schneidringen (6, 7) mit zwischen sich Schlitze (9) bildenden und eine Schneidkante (12) aufweisenden Zähnen (10), die bei dem äußeren Schneidring (7) axial verlaufen und ein flächiges Schneidprofil (11) aufweisen, dessen eine an dem zwischen den beiden Schneidringen (6, 7) im Ringspalt liegende Axialkante als Schneidkante (12) ausgebildet ist, während seine andere, parallel verlaufende Axialkante zusammen mit der Schneidkante (12) des folgenden Schneidprofils (11) eine für die Feinheit des herzustellenden Produktes entsprechend verengte Schneidlücke (14) bildet, wobei die Schneidkanten (12) beider Schneidringe (6, 7) gegeneinander geneigt sind, dadurch gekennzeichnet, daß die genannten Schneidprofile durch auswechselbare Platten (11) aus Hartmetall o. dgl. gebildet sind, die den ihr zugeordneten, axial gerichteten Zahn (10) auf dessen dem Ringspalt zwischen den beiden Schneidringen (6, 7) zugewandten Seite vollständig übergreift, und daß die beiden Axialkanten (12, 13) jedes Schneidprofils (11) gegen die Schneidrichtung des inneren Schneidringes (6) geneigt ($\alpha$) sind, so daß die rückwärtige Ansicht des Schneidprofils eine parallelogrammähnliche Ausbildung zeigt.

2. Schneidsatz nach Anspruch 1, dadurch gekennzeichnet, daß jeder Zahn (10) in eine im Rücken (16) des Schneidprofils (11) vorgesehene Nut (17) eingreift, die parallel zu dem axial gerichteten Zahn (10) verläuft.

3. Schneidsatz nach Anspruch 2, dadurch gekennzeichnet, daß die Nut (17) im Querschnitt leicht konisch ausgebildet ist.

4. Schneidsatz nach einem der vorhergehenden Ansprüche, dadurch gekennzeichnet, daß die Schneidprofile (11) durch Kleben und/oder Nieten (19) an den Zähnen (10) befestigt sind.

## Claims

1. Cutting set for an electromotorically driven apparatus to reduce foodstuffs, consisting of two cutting rings (6, 7) arranged concentrically one inside the other and rotating one with respect of the other with between them teeth (10) forming slits (9) and having a cutting edge (12), which teeth (10) extend axially on the outer cutting ring (7) and have a generally flat cutting profile (11), of which one axial edge, lying at an annular space between both cutting rings (6, 7) is formed as cutting edge (12) whereas its other parallel axial edge forms a cutting gap (14) together with the cutting edge (12) of the following cutting profile (11) narrowed in accordance with the fineness of the product to be prepared, whereby the cutting edges (12) of both cutting rings (6, 7) are inclined relatively, characterised in that the mentioned cutting profiles are formed by exchangeable plates (11) of hard metal or the like, which lies completely over an axially extending tooth (10) associated with it on the side facing the annular space between both cutting rings (6, 7) and that both axial edges (12, 13) of each cutting profile (11) are inclined ($\alpha$) against the direction of cutting of the inner cutting ring (6) so that the rearward view of the cutting profile has a form similar to a parallellogram.

2. Cutting set according to claim 1 characterised in that each tooth (10) is located in a groove (17) in a rear part (16) of the cutting profile (11), which groove (17) extends parallel to the axially extending tooth (10).

3. Cutting set according to claim 2 characterised in that the groove (17) has a slightly conical transverse section.

4. Cutting set according to any of the preceding claims characterised in that the cutting profile (11) is fastened to the teeth (10) by glueing and/or rivets.

## Revendications

1. Jeu d'organes de coupe pour dispotitif pour broyer les aliments actionné par moteur électrique, comprenant deux anneaux de coupe (6, 7) agencés concentriquement l'un dans l'autre, mobiles en rotation l'un par rapport à l'autre, et comportant des dents (10) qui présentent une arête de coupe (12), qui définissent entre elles des entailles (9), s'étendent axialement sur l'anneau de coupe extérieur (7) et portent un profil de coupe aplati (11) dont une arête axiale se trouvant dans la fente annulaire entre les deux anneaux de coupe est constituée en arête de coupe (12), tandis que son autre arête axiale, parallèle à la première, forme avec l'arête de coupe (12) du profil de coupe suivant (11) une lacune de coupe (14), dont l'étroitesse correspond à la finesse du produit à confectionner, les arêtes de coupe (12) des deux anneaux de coupe (6, 7) présentant une inclinaison relative, caractérisé en ce que les profils de coupe précités sont constitués de plaquettes amovibles (11) en métal dur ou analogue, qui recouvrent complètement la dent associée dirigée axialement (10) sur le côté de cette dernière tourné vers la fente annulaire séparant les deux anneaux de coupe (6, 7), et en ce que les deux arêtes axiales (12, 13) de chaque profil de coupe (11) sont inclinées ($\alpha$) par rapport à la direction de coupe de l'anneau de coupe intérieur (6), de sorte que vu de derrière, le profil de coupe a une conformation analogue à un parallélogramme.

2. Jeu d'organes de coupe conforme à la revendication 1, caractérisé en ce que chaque dent (10) s'engage dans une rainure ménagée à l'arrière (16) du profil de coupe (11) et parallèle à la dent (10) dirigée axialement.

3. Jeu d'organes de coupe conforme à la revendication 2, caractérisé en ce que, vue en coupe transversale, la rainure (17) est légèrement conique.

4. Jeu dòrganes de coupe conforme à l'une quelconque des revendications précédentes, caractérisé en ce que les profils de coupe (11) sont fixés aux dents (10) par collage et/ou par rivets (19).

Fig.1

Fig.2

IV

IV

7

11

9

10

12  19  14  11  13

Fig.3

10  9  7

Fig.4

7

11

Fig.5

Fig.6